# EUROPÄISCHE PATENTSCHRIFT

(11) **EP 1 661 444 B1**
(45) Veröffentlichungstag und Bekanntmachung des Hinweises auf die Patenterteilung: **05.03.2008**
(21) Anmeldenummer: 06002697.8
(22) Anmeldetag: 09.10.2004
(51) Int. Cl.: A01C 23/04, A01M 7/00

(54) **Landwirtschaftliche Verteilmaschine**
Agricultural spreader
Epandeur agricole

(30) Priorität: 23.10.2003 DE 10349326; 23.10.2003 DE 10349325
(43) Veröffentlichungstag der Anmeldung: 31.05.2006
(62) Teilanmeldung aus: 04024118.4
(73) Patentinhaber: Amazonen-Werke H. Dreyer GmbH & Co. KG, 49205 Hasbergen (DE)
(72) Erfinder: Oberheide, Friedrich, 49143 Bissendorf (DE)

(56) Entgegenhaltungen:
- AT-B- 397 451
- FR-A- 2 298 264
- FR-A- 2 669 805
- US-A- 3 887 132
- US-A- 6 119 963

## Beschreibung

Die Erfindung betrifft eine landwirtschaftliche Verteilmaschine gemäß des Oberbegriffes des Patentanspruches 1.

Eine derarige Verteilmaschine ist in der Praxis bekannt. Bei dieser Verteilmaschine können die Seitenausleger um eine aufrechte Achse eingeklappt werden, so dass sie sich in Transportstellung seitlich und/oder oberhalb des Vorratsbehälters erstrecken. Hierbei werden die Seitenausleger auf langen Abstützelementen abgelegt. Hierbei werden die Seitenausleger an dem Mittelteil mittels eines Seiles an dem oberen Bereich abgespannt, um so die Möglichkeit zu schaffen, dass die Seitenausleger in Transportstellung im begrenzten Umfang gegenüber den Mittelrahmen um eine in Fahrtrichtung verlaufende Achse bewegbar angeordnet sind. Somit ist also eine Bewegungsmöglichkeit zwischen den Seitenauslegern und Mittelrahmen während des Transportes möglich. Diese Abspannung mittels eines Seiles der Seitenausleger zu Erreichung der Bewegungsmöglichkeit zu dem Mittelteil ist relativ aufwendig, weil ein separates zusätzliches Gelenk, welches diese Bewegungsmöglichkeit ermöglicht, sowie eine zusätzliche Abspannung durch das Seil erforderlich ist.

Die US 38 87 132 zeigt eine weitere landwirtschaftliche Verteilmaschine, wie sie im Oberbegriff des Patentanspruches 1 umrissen ist. Die Seitenausleger sind jeweils mit einem unteren festen Gelenk an dem Mittelrahmen angelenkt, welcher eine horizontal verlaufende Gelenkachse aufweist, welche es gestattet, dass das Verteilergestänge während der Einklappbewegung aus der Arbeits- in die Transportstellung in begrenztem Umfang angehoben werden kann. Die oberen Gelenkelemente sind relativ aufwendig ausgebildet und bestehen aus einem Hydraulikzylinder und einer Abspannstange. Die Abspannstange ist an einem beweglichen nach hinten heraus tragenden Arm angeordnet, welcher eine gewisse Möglichkeit der Bewegbarkeit des Seitenauslegers in Transportstellung gegenüber dem Mittelrahmen um eine quer zur Fahrtrichtung verlaufende Achse ermöglicht.

Der Erfindung liegt die Aufgabe zugrunde, eine einfache Bewegungsmöglichkeit der Seitenausleger gegenüber dem Mittelrahmen in Transportstellung des Verteilergestänges zu ermöglichen.

Diese Aufgabe wird erfindungsgemäß dadurch gelöst, dass das jeweilige untere Gelenkelement mittels, welchem der jeweilige Seitenausleger am Mittelrahmen angeordnet ist, ein in Transportstellung der Seitenausleger wirksames und sich in Fahrtrichtung erstreckendes Langloch aufweist. Infolge dieser Maßnahmen kann der Seitenausleger mittels einfacher Gelenke am Mittelrahmen angeordnet werden. Es ist lediglich erforderlich das untere Lager als ein sich in Fahrtrichtung erstreckendes Langloch auszubilden.

In einer Ausführung ist vorgesehen, dass das Langloch sich im am Mittelrahmen angeordneten Gelenkelement befindet und sich in Fahrtrichtung erstreckt, und dass in das Langloch der Gelenkbolzen des am Seitenausleger angeordneten Gelenkelementes fasst.

In einer anderen Ausgestaltung ist vorgesehen, dass das Langloch sich im am Seitenausleger angeordneten Gelenkelement befindet und sich in Längsrichtung des Seitenauslegers erstreckt und dass in das Langloch der Gelenkbolzen des am Mittelrahen angeordneten Gelenkelementes fasst.

Damit der Seitenausleger in Transportstellung gegenüber dem Mittelrahmen sich nicht im unteren Bereich während der Arbeit bewegen kann, ist vorgesehen, dass dem unteren Gelenkelement Mittel zugeordnet sind, die in Arbeitsstellung den Gelenkbolzen in dem Langloch in ein festgelegte Position festsetzt. Infolge dieser Maßnahme wird die Funktion des Langloches außer Funktion gesetzt und der Gelenkbolzen wird in dem Langloch in eine festgelegte Position arretiert.

Weitere Einzelheiten der Erfindung sind der Beispielsbeschreibung und den Zeichnungen zu entnehmen.

Hierbei zeigen
- Fig. 1: das Verteilergestänge einer landwirtschaftlichen Feldspritze in der Ansicht von hinten in gestreckter Lage und in Prinzipdarstellung,
- Fig. 2: das Verteilergestänge der Feldspritze nach Fig. 1, wobei die Seitenausleger angewinkelt sind,
- Fig. 3: das Verteilergestänge der Feldspritze nach Fig. 1, wobei der rechte Seitenausleger angewinkelt ist,
- Fig. 4: das Verteilergestänge einer landwirtschaftlichen Feldspritze in der Ansicht von hinten und in perspektivischer Darstellung und in gestreckter Lage,
- Fig. 5: das Verteilergestänge gemäß Fig. 4, wobei der mittlere Bereich in Perspektivdarstellung von hinten gesehen dargestellt ist,
- Fig. 6: das Mittelteil und das daran anschließende Teil und das diese beiden miteinander verbindende Gelenk in Perspektivdarstellung von hinten,
- Fig. 7: das untere mittlere rechte Gelenk in Perspektivdarstellung,
- Fig. 8: das Verteilergestänge in eingeklapptem Zustand und in perspektivischer Darstellung,
- Fig. 9: das eingeklappte Gestänge gemäß Fig. 8 in vergrößerter Darstellung, in Teilansicht und perspektivischer Darstellung und
- Fig. 10: das hintere rechte Mittelteil und das hintere rechte Teil des eingeklappten Verteilergestänges gemäß Fig. 8.

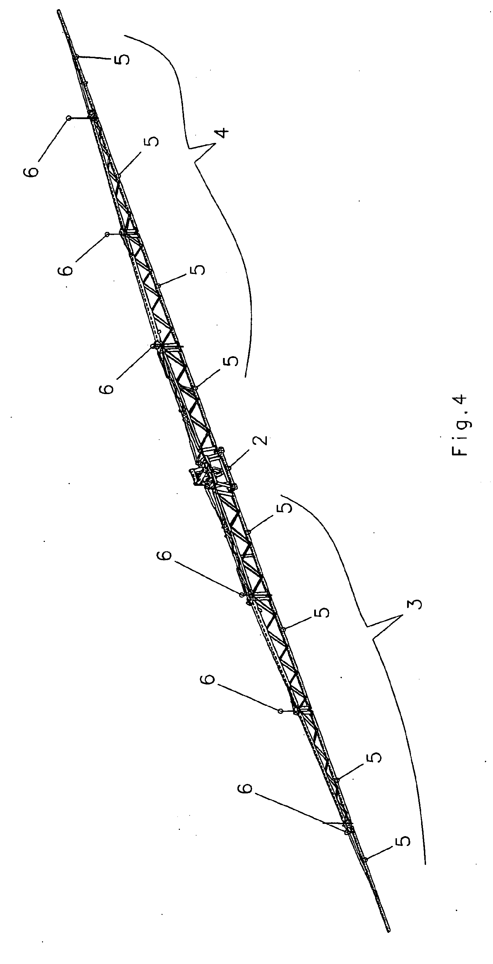

Das Verteilergestänge 1 ist zur Anordnung an einer nicht dargestellten landwirtschaftlichen Verteilmaschine, die einen Rahmen, Vorratsbehälter aufweist, vorgesehen. Das Verteilergestänge 1 weist ein Mittelrahmenteil 2 und sich hieran seitlich anschließende Seitenausleger 3 und 4 auf. Das Mittelrahmenteil 2 ist über ein Höhenverstellgestänge an dem Rahmen einer Verteilmaschine angeordnet. Die Seitenausleger 3,4 bestehen aus Teilsegmenten 5, die mittels Gelenke 6 miteinander verbunden sind, so dass die Seitenausleger 3,4 in eine Transportstellung zusammenfaltbar sind. Die Seitenausleger 3,4 sind über ein unteres Gelenk 7 und obere Gelenkelemente 8 an dem Mittelrahmenteil 2 angeordnet und über jeweils einen zwischen dem Mittelrahmenteil 2 und dem inneren Teilsegment 5 des jeweiligen Seitenauslegers 3,4 angeordneten Hydraulikzylinder 9 um die durch das untere Gelenk 7 und das obere Gelenkteil 10 der oberen Gelenkelemente 8 verlaufene Gelenkachse 11 ein- und ausfaltbar. Des weiteren ist zwischen dem oberen Gelenkteil 10 und dem Mittelrahmenteil 2 ein vorzugsweise als Hydraulikzylinder 11 ausgebildetes Anwinkelmittel, das Bestandteil der oberen Gelenkelemente 8 ist, zum Anwinkeln des jeweiligen Seitenauslegers 3,4 des Verteilergestänges um eine in Fahrtrichtung weisende Achse 13 zugeordnet. Des weiteren ist zwischen dem oberen inneren Teil des Seitenauslegers 3,4 im Bereich des oberen Gelenkteiles und dem Mittelrahmenteil 2 eine einstellbare Strebe 14, die Bestandteil der oberen Gelenkelemente 8 ist, angeordnet. Das als Hydraulikzylinder 11 ausgebildete Anwinkelmittel und die als einstellbare Schraubspindel ausgebildete Strebe 14 sind beabstandet zueinander am Mittelrahmenteil 2 angelenkt. Somit ist das obere Gelenkmittel 8, mittels welchem der jeweilige Seitenausleger 3,4 am Mittelrahmenteil 2 angeordnet ist, jeweils über das Anwinkelmittel 11 und der weiteren Strebe 14 mit dem Mittelrahmenteil 2 verbunden. Das Anwinkelmittel 11 und die Strebe 14 sind in Draufsicht gesehen von dem Gelenk 10 am Ausleger 3, 4 öffnend zueinander angeordnet, wie Fig. 4 zeigt.

Das untere Gelenk 7, mittels welchem das innere Teilsegment 5 des jeweiligen Seitenauslegers 3,4 am Mittelrahmenteil 2 angeordnet ist, ist als Kugelgelenk 15 ausgebildet. Dieses Kugelgelenk 15 weist einen aufrecht verlaufenen Gelenkbolzen 16 auf. Um die Mittelachse 17 dieses Gelenkbolzens 16 ist der Seitenausleger 3,4 in Verbindung mit dem Kugelgelenk 15 ein-und ausschwenkbar. Des weiteren ist der Seitenausleger 3,4 aufgrund des Kugelgelenkes 15 um eine in Fahrtrichtung 12 weisende Achse 18 bzw. mit anderen Worten ausgedrückt, um eine quer zur Längsachse 17 des Bolzens 16 verlaufene Achse 13 aufgrund der oberen Anlenkung durch die Gelenkelemente 8 des Seitenauslegers 3, 4 gegenüber dem Mittelrahmenteil 2 verschwenkbar.

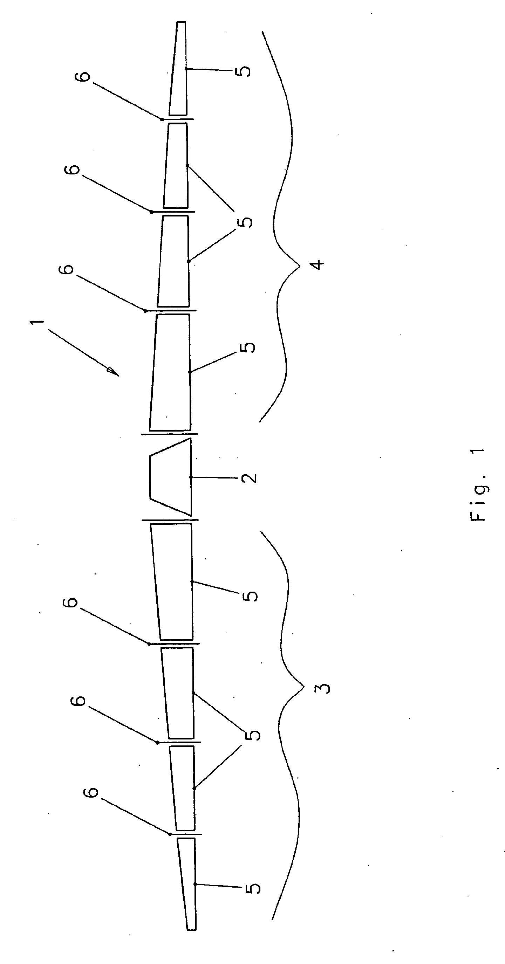

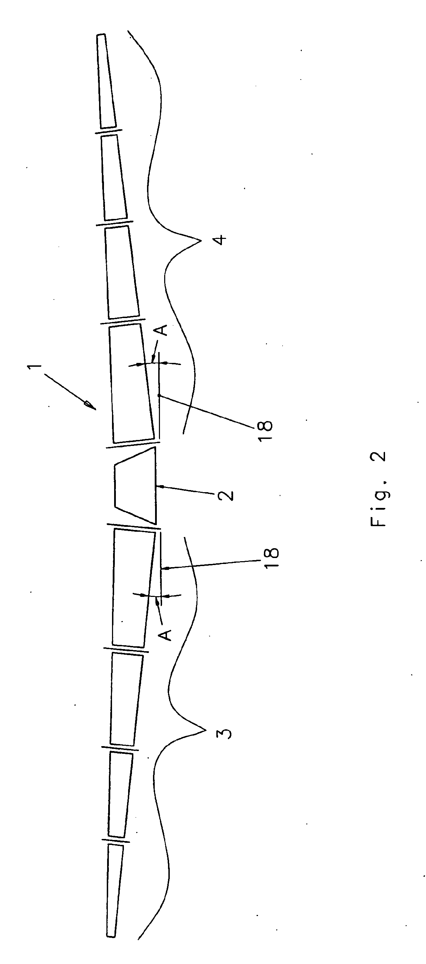

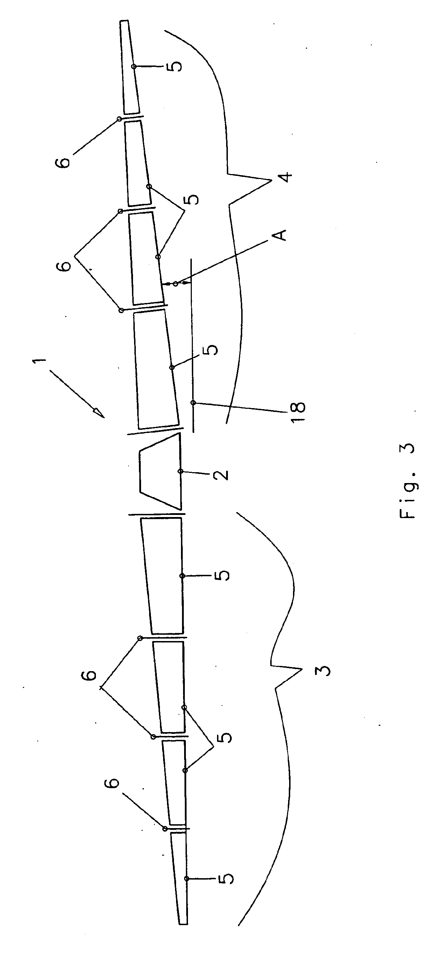

Aufgrund der Ausbildung des unteren Gelenkes 7 als Kugelgelenk 15, mittels welchem der jeweilige Seitenausleger 3, 4 an dem Mittelrahmenteil 2 angelenkt ist, sind die jeweiligen Seitenausleger 3, 4 aus der in Fig. 1 dargestellten gestreckten Lage in die in Fig. 2 dargestellte angewinkelte Lage um den Winkel A gegenüber der Horizontalen 18 anzuwinkeln. In der Fig. 3 ist der linke Seitenausleger 3 in gestreckter Lage entsprechend Fig. 1 dargestellt, während der rechte Ausleger 4 entsprechend Fig. 1 in der Fig. 2 angewinkelt ist.

Das Anwinkeln geschieht dadurch, dass mittels des Hydraulikzylinders 11 der obere Gelenkteil 10 in Richtung des Mittelrahmenteils 2 gezogen wird, d.h. der Hydraulikzylinder 11 wird eingefahren. Um gleichzeitig zu verhindern, dass durch diese Anwinkelbewegung des Seitenauslegers 3, 4 der jeweilige Seitenausleger 3, 4 nicht eine Tendenz zum Einfalten aufweist, wird der Hydraulikzylinder 9 ausgefahren. Hierzu sind die Hydraulikzylinder 9 und 11 über nicht dargestellte Leitungen mit einer nicht dargestellten Schaltung verbunden, so dass beim Betätigen des als "Einwinkelzylinders" wirkende Hydraulikzylinder 11 gleichzeitig der als Einfaltzylinder wirkende Hydraulikzylinder 9 ausgefahren wird. Hierdurch behält der jeweils angewinkelte Seitenausleger bei Veränderung des Anwinkelwinkels seine Lage quer zur Fahrtrichtung bei und kippt nicht um eine quer zur Fahrtrichtung des Gestänges verlaufenden Achse.

Aufgrund der Ausbildung des unteren Gelenkes 7 als Kugelgelenk 15 ist es nicht erforderlich, einen aufwendigen Zwischenrahmen zwischen dem Mittelrahmenteil 2 und dem Seitenausleger 3, 4 vorzusehen, um das Einwinkeln zu ermöglichen. Das Kugelgelenk 15 übernimmt somit gleichzeitig die Funktion eines Gelenkes beim Einwinkeln, wie auch die Funktion eines Gelenkes beim Ein- und Ausfalten der Seitenausleger 3, 4 des Verteilergestänges 1. Das Kugelgelenk 15 weist zumindest eine aufrechte Gelenkachse 11 und eine zumindest in Fahrtrichtung verlaufende Gelenkachse 13, bezogen auf die Arbeitsstellung des Verteilergestänges 1, auf.

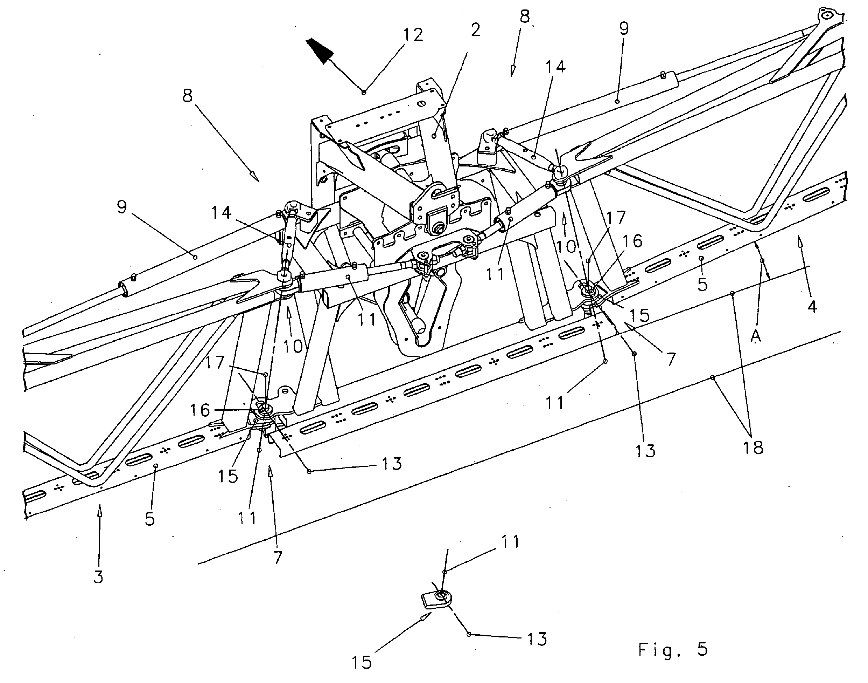

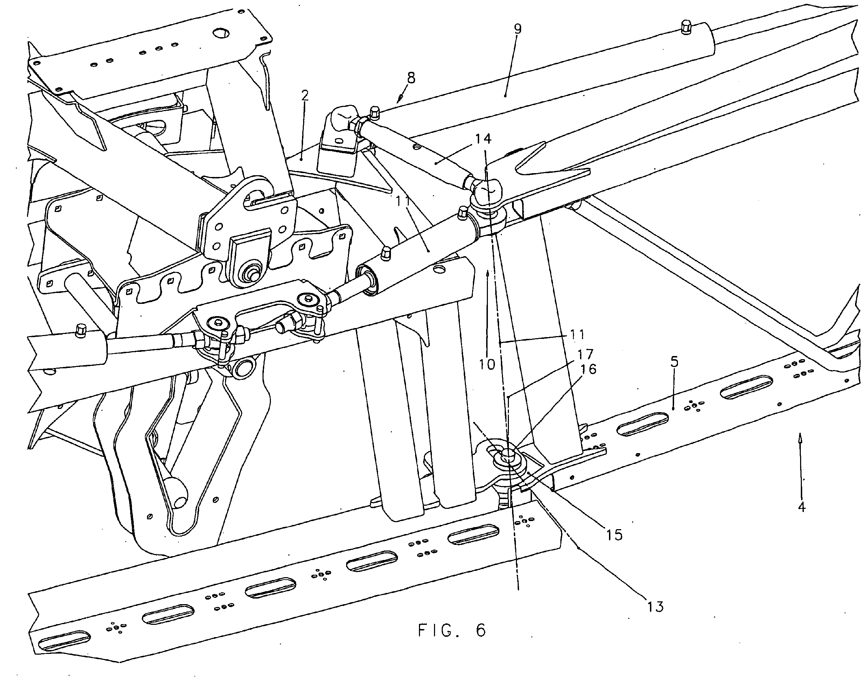

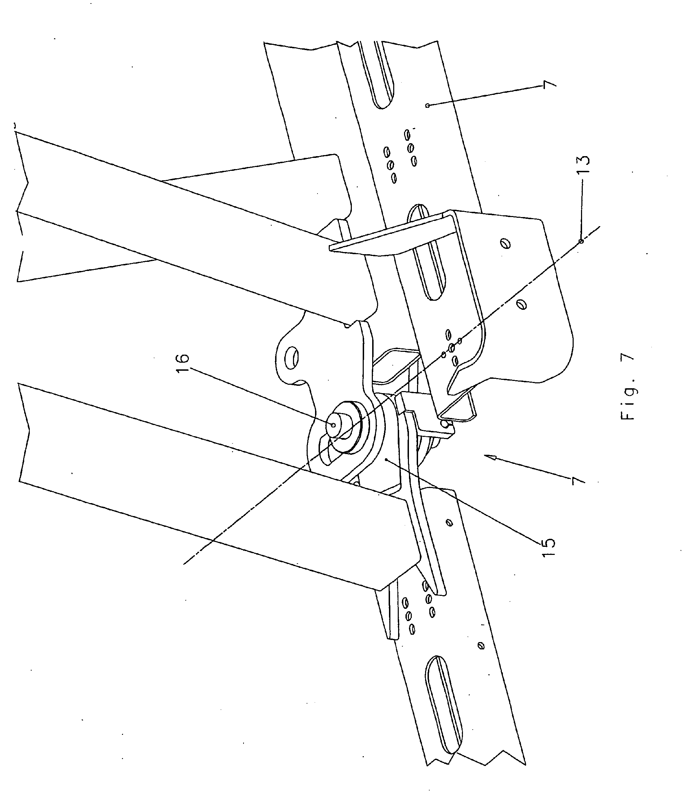

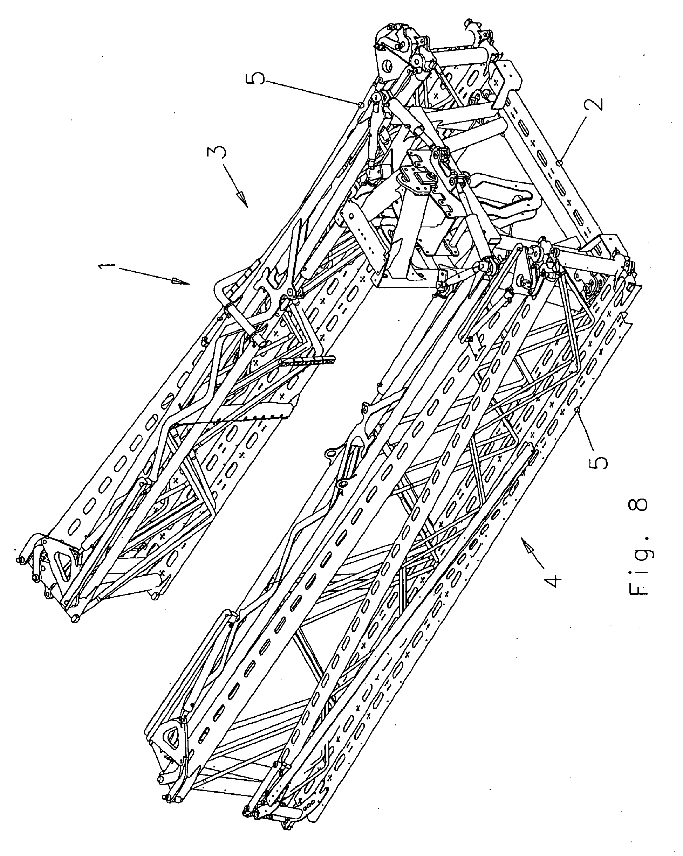

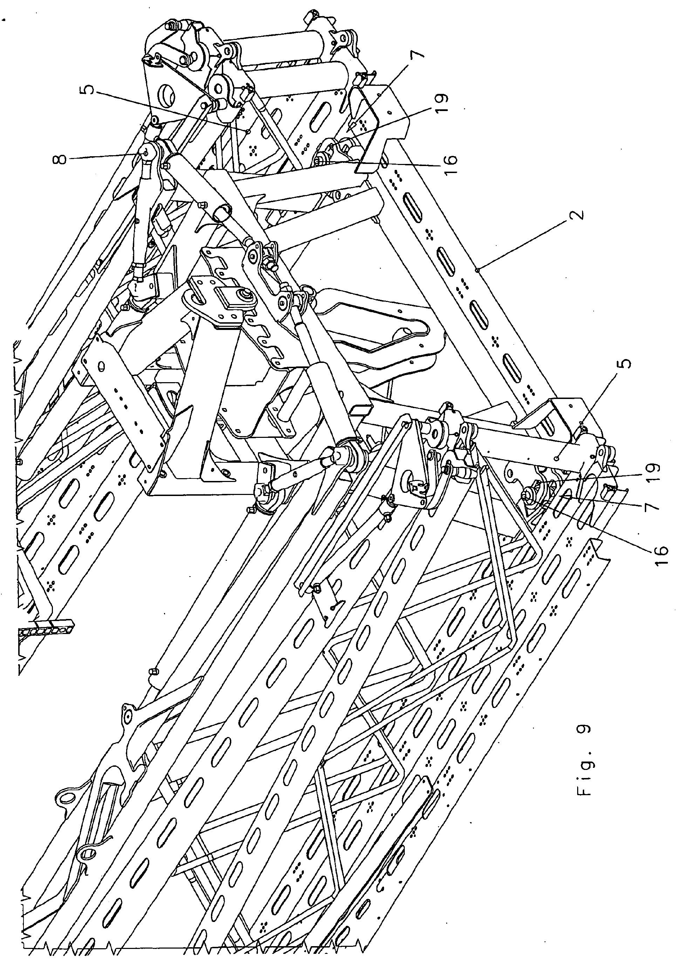

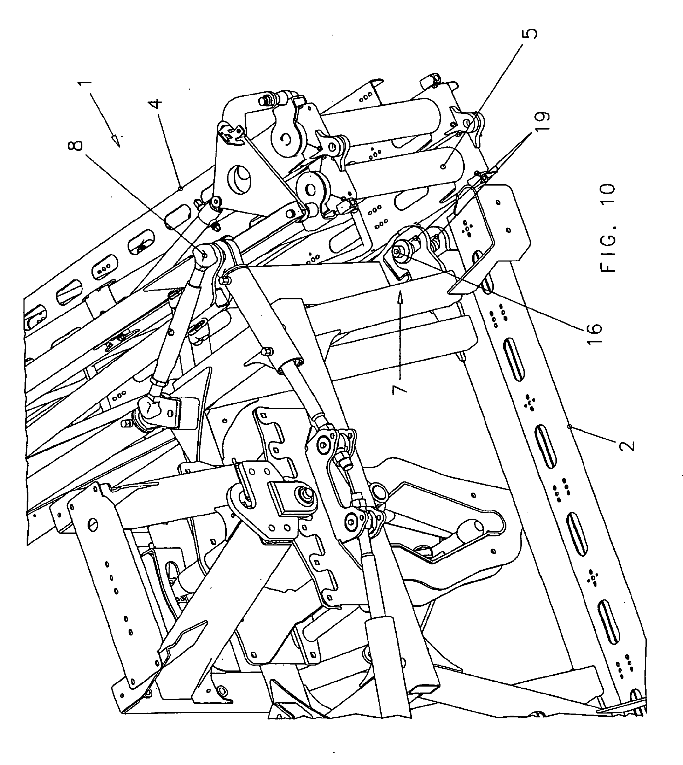

Das Verteilergestänge gemäß den Fig. 1 bis 9 lässt sich in die in den Fig. 8 bis 10 dargestellte eingeklappte Position einklappen. Hierzu wird der jeweilige Hydraulikzylinder 9 mit Druck beaufschlagt, so dass das innere Seitenteil 5 um die Achse 11 um etwa 90° nach vorn geklappt wird. Gleichzeitig werden durch nicht dargestellte Betätigungsmittel zwischen den übrigen Auslegern diese zick-zack-förmig zu den in der Fig. 8 dargestellten kompakten Paket, welches nach vorne ragt, zusammengeklappt.

In der eingeklappten Position liegt das Verteilergestänge 1 im vorderen Bereich auf Auflagen, die an der nicht dargestellten Verteilermaschine befestigt sind, auf. Gleichzeitig ist das Mittelteil an einer nicht darstellten Höhenverstelleinrichtung, die zwischen dem Mittelteil 2 und dem Rahmen der nicht darstellten Verteilermaschine angeordnet ist, in begrenztem Umfang federnd bewegbar. Damit es zu keinen Beschädigungen am dem Mittelteil 2 und dem Verteilergestänge 1 und an Teilen des Verteilergestänges 1 kommt, weist das untere Gelenkelement 7, mittels welchem der jeweilige innere Seitenausleger 3, 4 am Mittelrahmen 2 angeordnet ist, ein in Transportstellung der Seitenausleger 3, 4 wirksames und sich in Fahrtrichtung erstreckendes Langloch 19 auf. In diesem Langloch 19 ist der an dem Seitenausleger 3, 4 angeordnete Gelenkbolzen 16 des Kugelgelenkes angeordnet. Somit kann sich also das zusammengeklappte Verteilergestänge 1 in seiner Transportstellung, wie in den Fig. 8 bis 10 gezeigt, um den oberen Gelenkpunkt 8 in dem unteren Gelenkelement 7 im begrenzten Umfang bewegen, so dass Beschädigungen vermieden werden.

Wenn das Verteilergestänge 1 aus den in Fig. 8 bis 10 dargestellten Transportposition in die in den Fig. 1 bis 7 dargestellten Arbeitsstellung gebracht ist, wird die Bewegungsmöglichkeit des Gelenkbolzens 16 in dem Langloch 19 durch Mittel festgelegt. Hierbei kommen die an dem Mittelteil 2 und an dem Ausleger 3, 4 angeordneten Verriegelungselemente zueinander in Verriegelungsstellung, so dass die Verriegelungsmöglichkeit des Bolzens 16 in dem Langloch 17 ausgeschaltet wird. Der Gelenkbolzen 16 befindet sich dann in einer festgelegten Position in dem Langloch 19.

## Patentansprüche

1. Landwirtschaftliche Verteilmaschine mit einen Rahmen, Vorratsbehälter und einem aus einem Mittelrahmen (2) und jeweils mittels unterer und oberen Gelenkelemente (7,8) an diesen beiderseits anschließenden Seitenausleger (3,4) bestehendes Verteilergestänge (1) welches in eine Arbeitsstellung und in eine Transportstellung bringbar ist, wobei das Verteilergestänge (1) sich in Transportstellung seitlich und/oder oberhalb des Vorratsbehälters erstreckt und sich im vorderen Bereich des Vorratsbehälters auf mit dem Rahmen verbundenen Abstützelementen abstützt, wobei die Seitenausleger (3,4) in Transportstellung im begrenzten Umfang gegenüber dem Mittelrahmen (2) um eine quer zur Fahrtrichtung verlaufende Achse bewegbar angeordnet sind, **dadurch gekennzeichnet, dass** das jeweilige untere Gelenkelement (7), mittels welchem der jeweilige Seitenausleger (3,4,5) am Mittelrahmen (2) angeordnet ist, ein in Transportstellung der Seitenausleger (3,4,5) wirksames und sich in Fahrtrichtung erstreckendes Langloch (19) aufweist.

2. Verteilmaschine nach Anspruch 1, **dadurch gekennzeichnet, dass** das Langloch (19) sich im am Mittelrahmen (2) angeordneten Gelenkelement (7) befindet und sich in Fahrtrichtung erstreckt, dass in das Langloch (19) der Gelenkbolzen (16) des am Seitenausleger (3,4,5) angeordneten Gelenkelementes (7) fasst.

3. Verteilmaschine nach Anspruch 1, **dadurch gekennzeichnet, dass** das Langloch (19) sich im am Seitenausleger (3,4,5) angeordneten Gelenkelement (7) befindet und sich in Längsrichtung des Seitenauslegers (3,4,5) erstreckt, und dass in das Langloch der Gelenkbolzen (16) des am Mittelrahmen (2) angeordneten Gelenkelementes (7) fasst.

4. Verteilmaschine nach einem oder mehreren der vorstehenden Ansprüche, **dadurch gekennzeichnet, dass** dem unteren Gelenkelement (7) Mittel zugeordnet sind, die in Arbeitsstellung den Gelenkbolzen (16) in dem Langloch (19) in eine festgelegte Position festsetzt.

## Claims

1. Agricultural distributor with a frame, hopper and a distributor linkage assembly (1), which comprises a central frame (2) and side booms (3, 4) that are connected on both sides of the said central frame in each case by means of lower and upper pivot members (7, 8), the said distributor linkage assembly being displaceable into an operating position and a transport position, wherein the distributor linkage assembly (1) extends in the transport position laterally and/or above the hopper and is supported in the front region of the hopper on support elements that are connected to the frame, wherein the side booms (3, 4) are disposed in the transport position so as to be displaceable to a limited extent relative to the central frame (2) about an axis that extends transversely relative to the direction of travel, **characterised in that** the respective lower pivot member (7), by means of which the respective side boom (3, 4, 5) is disposed on the central frame (2), includes an elongate hole (19), which is operational in the transport position of the side booms (3, 4, 5) and extends in the direction of travel.

2. Distributor according to claim 1, **characterised in that** the elongate hole (19) is situated in the pivot member (7) disposed on the central frame (2) and extends in the direction of travel, **in that** the pivot pin (16) of the pivot member (7) disposed on the side boom (3, 4, 5) engages in the elongate hole (19).

3. Distributor according to claim 1, **characterised in that** the elongate hole (19) is situated in the pivot member (7) disposed on the side boom (3, 4, 5) and extends in the longitudinal direction of the side boom (3, 4, 5), and **in that** the pivot pin (16) of the pivot member (7) disposed on the central frame (2) engages in the elongate hole.

4. Distributor according to one or more of the preceding claims, **characterised in that** means are associated with the lower pivot member (7) and in the operating position the said means secure the pivot pin (16) in the elongate hole (19) in a determined position.

## Revendications

1. Epandeur agricole comportant un châssis, un réservoir et une flèche d'épandage (1) composée d'une partie centrale de châssis (2) et de part et d'autre de celle-ci de bras latéraux (3, 4) reliés à celle-ci par des éléments d'articulation inférieurs et supérieurs (7, 8), la flèche se mettant dans une position de travail ou dans une position de transport, dans laquelle
la flèche d'épandage (1) s'étend latéralement et/ou au-dessus du réservoir et s'appuie dans la zone avant du réservoir sur des éléments d'appui reliés au châssis,
les bras latéraux (3, 4) en position de transport, étant mobiles de manière limitée par rapport à la partie centrale de châssis (2) autour d'un axe transversal à la direction de déplacement,
**caractérisé en ce que**
l'élément d'articulation inférieur (7) respectif qui relie le bras latéral (3, 4, 5) à la partie centrale de châssis (2), comporte un trou oblong (19) s'étendant dans la direction de déplacement et fonctionnant lorsque les bras latéraux (3, 4, 5) sont en position de transport.

2. Epandeur agricole selon la revendication 1,
**caractérisé en ce que**
le trou oblong (19) appartient à l'élément d'articulation (7) de la partie centrale de châssis (2) et s'étend dans la direction de déplacement, ce trou oblong (19) recevant le goujon d'articulation (16) de l'élément d'articulation (7) du bras latéral (3, 4, 5).

3. Epandeur agricole selon la revendication 1,
**caractérisé en ce que**
le trou oblong (19) fait partie de l'élément d'articulation (7) du bras latéral (3, 4, 5) et s'étend dans la direction longitudinale du bras latéral (3, 4, 5) ; et
le trou oblong reçoit l'élément d'articulation (7) du goujon d'articulation (16) prévu sur la partie centrale de châssis (2).

4. Epandeur agricole selon l'une ou plusieurs des revendications précédentes,
**caractérisé en ce que**
l'élément d'articulation inférieur (7) comporte des moyens qui, en position de travail, bloquent le goujon d'articulation (16) dans une position déterminée dans le trou oblong (19).
